# EUROPEAN PATENT SPECIFICATION

(11) **EP 4 118 269 B1**
(45) Date of publication and mention of the grant of the patent: **27.12.2023**
(21) Application number: 21707754.4
(22) Date of filing: 02.03.2021
(51) Int. Cl.: E02B 17/00, E02D 27/52, E02D 27/42, B66C 1/10, B66C 13/08

(54) **UPENDING AND LIFTING TOOL**
HEBE- UND AUFRICHTWERKZEUG
OUTIL DE RETOURNEMENT ET DE LEVAGE

(30) Priority: 11.03.2020 NL 2025102
(43) Date of publication of application: 18.01.2023
(73) Proprietor: Itrec B.V., 3115 HH Schiedam (NL)
(72) Inventor: DONKERS, Jeroen Adrianus Joseph, 3115 HH Schiedam (NL)
(74) Representative: EP&C
(86) International application number: PCT/EP2021/055148
(87) International publication number: WO 2021/180515

(56) References cited:
- DE-U1-202009 006 507

## Description

The invention relates to an upending and lifting tool that is to be suspended from one or more hoisting cables, e.g. from a crane hook of a crane. The tool is envisaged for use in the installation of a wind turbine, in particular for upending and lifting of a monopile of an offshore wind turbine. The tool may also be applied for other purposes, e.g. upending other piles, e.g. piles used for fixing a jacket-type foundation to the seabed, for mooring, etc. The tool could also be of use for upending other wind turbine components, e.g. like the mast, or of a jacket-type foundation.

In the field of monopile installation, upending of a monopile from a horizontal orientation into a vertical orientation commonly entails the use of an upending and lifting tool.

In a known embodiment, the tool comprises a frame that is provided with a functional part that is operable for coupling to the upper end of the monopile, e.g. onto a flange at the upper end or by frictionally gripping a part of the upper end, e.g. with an annular array of operable friction grip members of the tool engaging the inside of the upper end of the monopile.

An example of a rather complex upending and lifting tool is disclosed in EP3574149.

Another example is disclosed in DE202009006507U1, figures 9d and 9e thereof.

In the tool of EP3574149 a robust and heavy pivotal arm is pivotally mounted to an attachment member of the frame at an inner end thereof, with the lower ends of the cables being attached to the outer end or free end of the pivotal arm. A hydraulic cylinder arrangement is provided to cause a forced pivoting of the pivotal arm relative to the frame of the tool allowing for the frame to be moved between the vertical and horizontal orientations thereof. The latter orientation is of use when the tool is to be coupled to the horizontally oriented monopile prior to the upending thereof.

In the tool of DE202009006507U1 the above-mentioned robust and heavy pivotal arm is absent. Instead, the one or more cables are at their lower end pivotally connected to the attachment member of the frame via a shackle. This arrangement does not allow for any controlled pivoting of the frame into the horizontal orientation. Mounting the tool to a horizontally arranged monopile is done by first lifting the tool using another cable, e.g. using another crane, e.g. a smaller crane, that is connected to a stationary stabilization arm of the frame that extends in longitudinal direction. The cable is attached to this stabilization arm at a point that is vertically above the center of gravity when the frame is in the horizontal orientation.

The present invention aims to provide an improved or at least alternative upending and lifting tool which provides for controlled motion of the frame between the horizontal orientation and vertical orientation.

The present invention proposes an upending and lifting tool according to claim 1.

The invention is based on the insight that by the application of a cable shifting force to the one or more hoisting cables above the pivot axis where the cable(s) connect to the frame, so somewhere along the length of the one or more cables, the pivoting movement of the frame can be obtained without the use of the robust heavy pivotal arm as in EP3574149. It is noted that in the inventive tool the weight of the tool and of the object that is upended/lifted thereby, is absorbed by the one or more cables that attach to the attachment member of the frame, and the cable shifting mechanism only applies the force that is required for the controlled pivoting of the frame of the tool. This allows for a reduction in weight and size of the tool compared to EP3574149. Compared to DE202009006507U1 the handling of the tool is simplified.

Preferably, the cable shifting member comprises one or more pivotal cable shifting arms. For instance, the tool comprises two laterally spaced cable shifting arms connected at their outer ends by a horizontal cable engaging member, e.g. a horizontally extending tube.

The one or more pivotal cable shifting arms are at the inner end thereof pivotally connected to the frame. One or more shifting actuators are operative between the frame on one hand and the cable shifting arm(s) on the other hand. These shifting actuators are provided to drive the movement of the cable shifting member which brings it into engagement with the one or more hoisting cables when the frame is still vertically, and applies the force thereon so that, in reaction, the controlled pivoting of the frame to the horizontal orientation is caused.

In a preferred embodiment, the cable shifting member, for example comprising one or more pivotal cable shifting arms, forms one unitary rigid part, movable, e.g. pivotal, as a whole relative to the frame. The one or more of the shifting actuators are operative between the frame and the cable shifting member.

In an embodiment, the one or more cable shifting arms are each embodied as articulated arms each comprising multiple pivotally interconnected arm segments.

In an embodiment, the one or more cable shifting arms are telescopic, comprising one or more telescoping arm segments.

In a preferred embodiment, the one or more cable shifting arms form part of a four-bar mechanism together with one or more driven linkage members, one or more intermediate linking members, and a section of the frame. Herein, the one or more driven linkage members are each pivotally mounted at an inner end thereof to the frame. The one or more intermediate linkage members are each pivotally connected at an inner end thereof to an outer end of a respective one of the driven linkage members, and at an outer end thereof pivotally connected to a respective one of the cable shifting arms, at a location between the pivotally connected inner end and the engagement member. For example, this location is approximately halfway in between the inner end and the engagement member. The location determines a lever action of the cable shifting arm, amplifying the movement.

In an embodiment, the one or more shifting actuators drive pivoting of the driven linkage members in the direction of the hoisting cables, and, via the intermediate linkage members, thereby pivoting of the one or more arms in the direction of and against the hoisting cables, and thereby the engagement of, and application of the cable shifting force to, the hoisting cables. The pivotal motion of the frame is a reaction to the application of the cable shifting force that is exerted against the one or more cables by the mechanism.

For example, the one or more shifting actuators are hydraulic cylinders. As preferred, the tool is provided with a hydraulic power unit connected to the one or more hydraulic cylinders, e.g. arranged on the frame of the tool.

For example, the one or more shifting actuators are controllable by a remote control.

The cable engagement surface may, for example, be formed by a circular cross-section tube, by one or more rollers, or by another, preferably low-friction, surface.

In an embodiment, the inner end of the cable shifting member may be mounted, for example pivotally mounted, to the frame at a location above the pivot axis of the tool when the frame is in the horizontal orientation.

If the tool has the four-bar linkage mechanism integrated with the cable shifting member, preferably the inner end of the driven linkage member is connected to the frame at a location which is below the pivot axis when the frame is in a horizontal orientation, and the one or more shifting actuators are connected to the frame at a location that is below the pivot axis when the frame is in a horizontal orientation.

In an embodiment, the one or more shifting actuators are one or more hydraulic cylinders, of which one end is connected to the frame and another end to the cable shifting member, e.g. to the arms. For example, an extension of the one or more cylinders drives the pivoting of the cable shifting member towards and against the one or more hoisting cables.

In an embodiment with the four-bar linkage mechanism, the other ends of the one or more cylinders may be mounted to the driven linkage member(s) and via these driven linkage member(s) and the intermediate linkage member(s) connected to the cable shifting arm(s).

In an embodiment, the tool further comprises a lock mechanism, which is operative between the cable shifting member on one hand and the frame on the other hand. The lock mechanism is configured to secure the position of the cable shifting member relative to the center of gravity - in the horizontal orientation of the frame - such as to retain the frame in the horizontal orientation.

In an embodiment, the lock mechanism comprises the one or more cable shifting actuators. For example, when the shifting actuators are embodied as hydraulic cylinders, the shifting actuators are configured to secure the position by maintaining the extension when the frame is in the horizontal orientation.

In an embodiment, the functional part of the tool is operable for gripping in the horizontal orientation a longitudinal end of a wind turbine component, for example of a monopile or a mast, and retaining the longitudinal end during upending of the wind turbine component from a horizontal to a vertical orientation thereof while pivoting towards the vertical orientation. Various embodiment of the functional part are, for example, described in EP3574149 and DE202009006507U1.

In an embodiment, the cable engagement surface extends over a horizontal distance which covers two or more adjacent hoisting cables, for instance extends over 5 - 10 meters horizontally.

In an embodiment the functional part is operable for coupling the tool to the object, and the functional part of the tool comprises one or more guiding members configured to guide the tool into engagement with the object when the frame is in the horizontal orientation. For example, the object is a wind turbine component, e.g. a monopile or a mast, in a horizontal orientation. The functional part is operable for gripping the wind turbine component in the horizontal orientation of the frame and for retaining the wind turbine component during upending of the wind turbine component from the horizontal orientation of the component to a vertical orientation thereof while the frame pivots towards the vertical orientation of the frame. For example the functional part is configured for gripping onto a flange at an upper end of the wind turbine component, e.g. the monopile or mast, or for frictionally gripping a part of the upper end, e.g. with an annular array of operable friction grip members of the tool engaging the inside of the upper end of the monopile.

For example each guiding member is configured to, when the tool is relatively proximate to the object, engage the object. The engagement by the guiding members is such as to restrict movement of the tool in at least radial directions relative to the object, and configured to during a movement of the tool towards a position wherein it can couple to, e.g. can grip, the object, maintaining the engagement thereof such as to guide the tool towards the coupling position. In an embodiment two guiding members are provided in the form of guiding arms of which outer ends are to engage the object. The arms are for instance pivotally mounted to the frame of the tool, e.g. such that the outer ends are movable in a radial direction, and/or operated by means of one or more guiding actuators. In either form, the guiding members are configured for restricting a movability of the frame relative to the object by contacting the object, e.g. through an impact with and/or a pushing off, e.g. an active pushing off, against the object, e.g. prior to any coupling members, e.g. gripping members, contacting the object.

The invention also relates to an installation vessel for a foundation member of an offshore wind turbine, e.g. a monopile, which vessel is provided with a crane and a tool as described herein.

The invention also relates to a method for upending and lifting an object, e.g. a foundation member of an offshore wind turbine, e.g. a monopile, wherein use is made of an upending and lifting tool as described herein.

With the tool suspended from one or more hoisting cables, e.g. from a crane hook of a crane, and with the frame initially in the vertical orientation, a routine is performed which comprises operating the one or more shifting actuators, thereby moving the cable shifting member and engaging the cable engagement surface with the one or more hoisting cables at a height above the pivot axis and further continuing said motion of the cable shifting member and thereby applying a cable shifting force on the one or more hoisting cables resulting, in reaction, in a pivoting of the frame into the horizontal orientation thereof.

The routine is, for example, to be performed after pick-up of the tool by means of a crane, e.g. from a deck of a vessel, with the frame initially in the vertical orientation so as to bring to tool with the frame thereof in horizontal orientation, followed by engaging the tool with the object in horizontal orientation, e.g. a monopile horizontally aboard of vessel.

The invention will now be described with reference to the appended drawings. In the drawings:
- figure 1: shows schematically in a back-side perspective view an upending and lifting tool according to the invention, with the frame in the horizontal orientation thereof while approaching a longitudinal end of a monopile lying horizontally;
- figure 2: shows in a side view schematically the same upending and lifting tool, with the frame in the vertical orientation thereof, e.g. as the tool is picked up by a crane;
- figures 3,4: show in the same side view schematically the upending and lifting tool while the cable shifting member engages the hoisting cables;
- figure 5: shows in the same side view schematically the upending and lifting tool while the frame is in the horizontal orientation, engaging a longitudinal end of a monopile;
- figure 6: shows in a front view schematically the same upending and lifting tool, with the frame in the horizontal orientation thereof;
- figure 7: shows in the same side view as figure 1 schematically the displacement of the frame from the vertical to the horizontal orientation illustrating the pivoting and the cable shifting action.

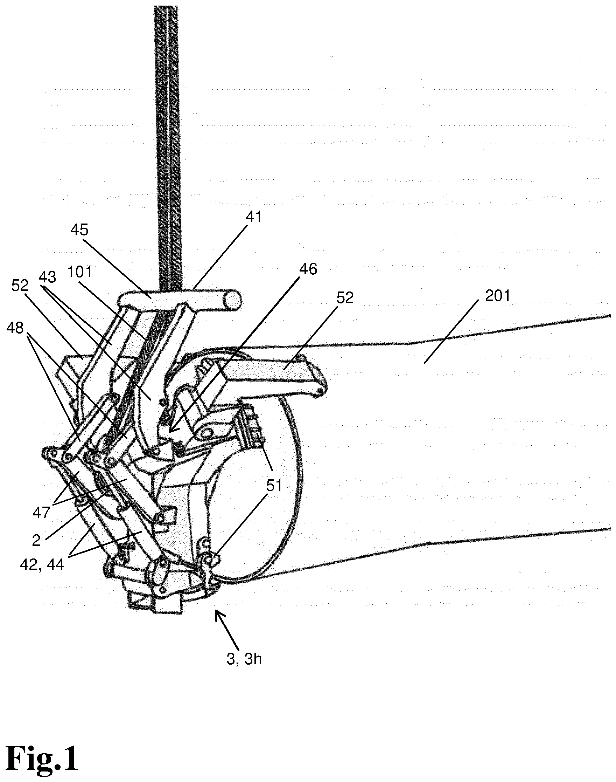

Figures 1 - 7 show an upending and lifting tool 1 according to an embodiment of the invention. The upending and lifting tool is suspended from one or more hoisting cables 101, here a pair of cable slings suspended from a hook 102 of a crane. For example, the cable slings are steel wire slings, or, more preferably, synthetic rope slings.

The tool 1 comprises a frame 3 with a functional part that is operable for coupling to an object 201.

In this case the object 201 is a wind turbine component, namely a monopile 201.

The functional part 3 is operable for engaging a longitudinal end of the monopile 201 in both a horizontal and vertical orientation of the monopile, and for retaining this end while the monopile 201 is moved between a horizontal and a vertical orientation by hoisting the retained end by means of the hoisting cables 101.

In figure 1, the monopile 201 is in a horizontal orientation and the tool 1 is shown approaching the monopile 201, with the frame thereof having been pivoted into the horizontal orientation.

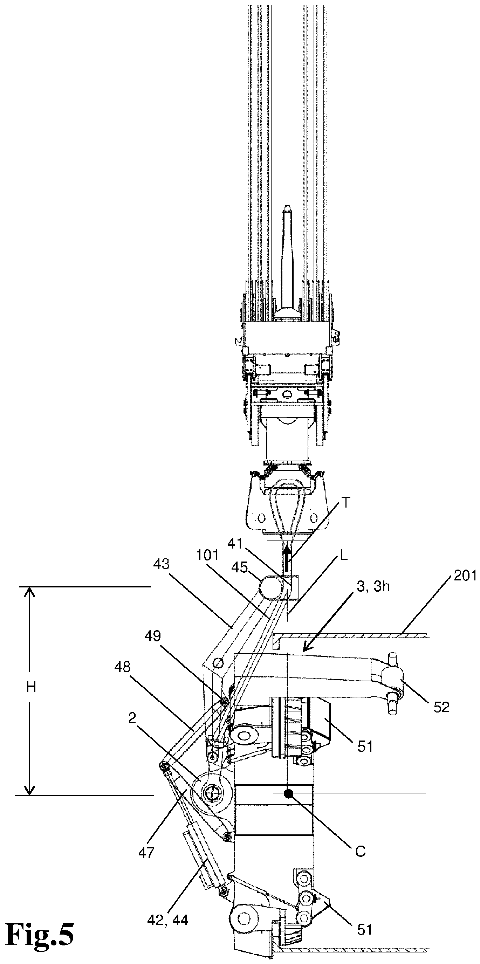

In figure 5, the monopile 201 is in a horizontal orientation as well, and the tool 1 is shown engaging the monopile 201.

The tool 1 comprises a cable attachment member 2 by means of which the frame 3 of the tool 1 is pivotally connected to the hoisting cables 101, e.g. the lower ends of the slings.

By this connection, the tool 1 is connected to the crane hook 102 or other tool suspension device. Here the hook 102 is suspended from a hoisting block with multiple cable sheaves, e.g. in view of the fact that the monopile or other object may weight several hundreds of tonnes or even several thousand tonnes.

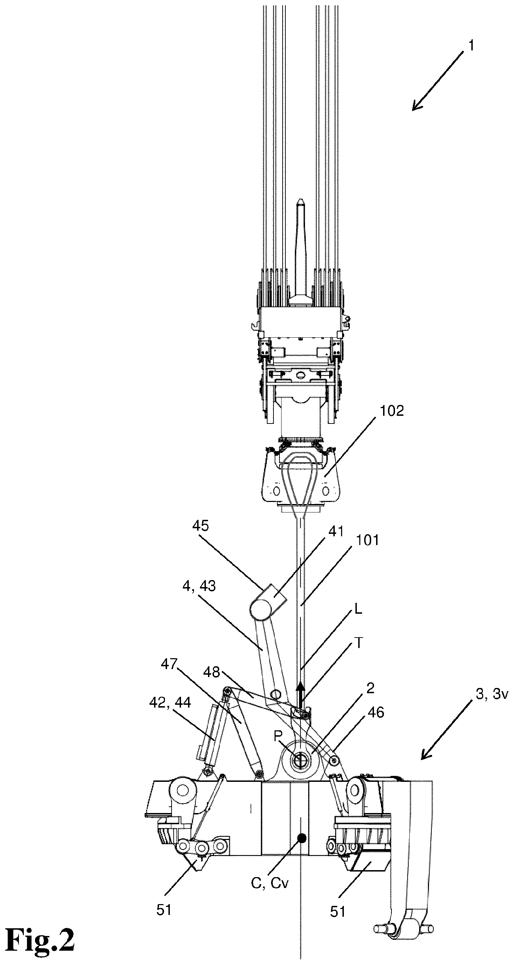

The attachment member 2 connects the frame 3 to the lower ends of the one or more hoisting cables 101 such that the frame 3 is pivotable around a substantially horizontal pivot axis P relative to the connected hoisting cables 101 between a vertical orientation 3v, shown in figure 2, and a horizontal orientation 3h, shown in figures 1, 3, 5, and 6.

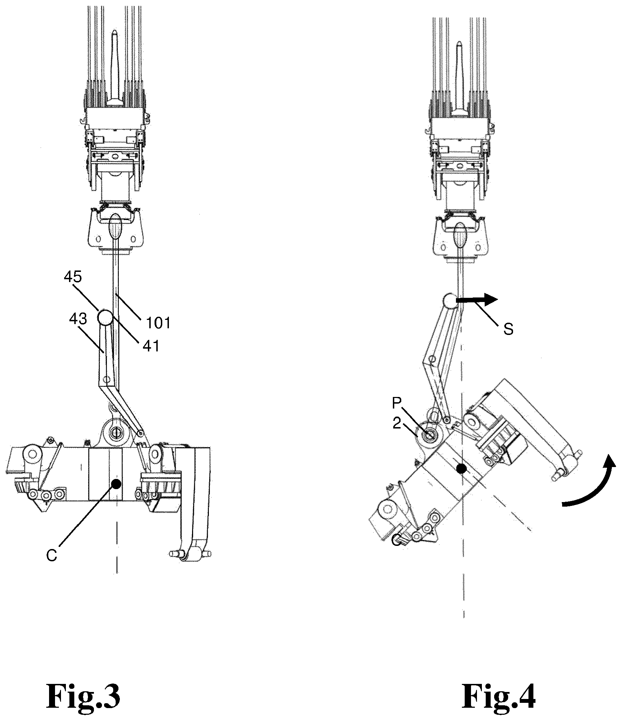

Figure 4 shows an intermediate orientation of the frame 3.

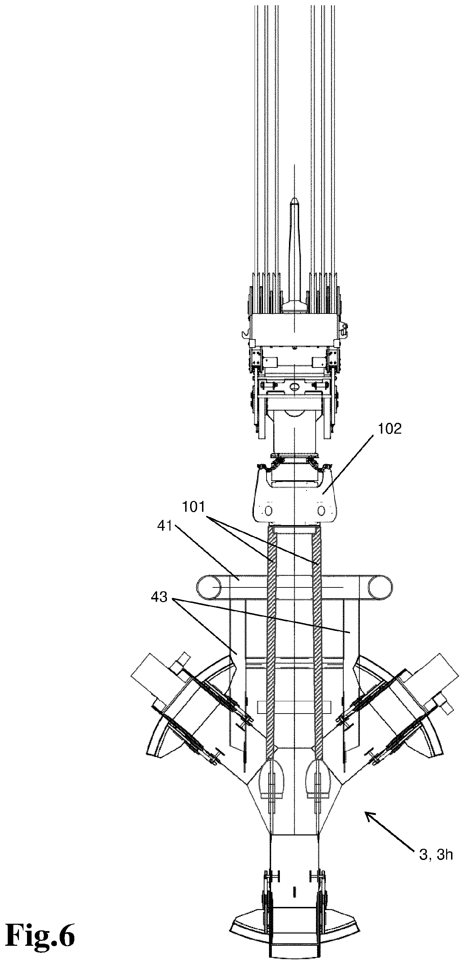

In this embodiment, the hoisting cables 101 each have an eye forming a loop around a horizontally extending axle of the attachment member, best visible in figures 1 and 6.

As shown in the figures, in the vertical orientation 3v of the frame 3, the horizontal orientation 3h thereof and the intermediate orientation thereof shown in figure 4, the center of gravity C of the frame 3 is naturally aligned with the line of action L of the resultant upwards tensioning force T on the tool by the hoisting cables 101.

The action of a cable shifting mechanism including the cable shifting member 4 accomplishes, that the frame 3 can be brought in a horizontal orientation 3h wherein the pivot axis P is horizontally aligned with the center of gravity C while the tool 1 is suspended from the hoisting cables 101.

The cable shifting member 4, in this example, comprises a bracket with two cable shifting arms 43, laterally spaced from each other, and a cable engagement tube 45. The inner ends of each arm 43 is pivotally connected to the frame 3 so as to be pivotal in a vertical plane. The outer ends of the arms 43 support the horizontally extending tube 45 that forms the cable engagement surface 41. The tube 45, for example, may have a length between 5 and 10 meters in practical embodiments.

Shifting actuators 42 are provided to be operative between the frame 3 and the cable shifting member, here via linkage members 47 and 48 of the cable shifting mechanism. These cable shifting arms 43 and linkage members 47 and 48 are laterally spaced from each other as visible in figures 1 and 6. The tool 1 has two shifting actuators 42, one for each cable shifting arm 43.

In this embodiment, the cable shifting mechanism comprises is a four-bar linkage mechanism. The two laterally spaced apart driven linkage members 47, each pivotally mounted with an inner end thereof to the frame 3, two laterally spaced apart intermediate linkage members 48, an inner end of each of which is pivotally mounted to respective outer ends of the driven linkage members 47 and an outer end of each of which is pivotally mounted to respective linking points 49 of the cable shifting arms 43, the cable shifting arms 43, and the section of the frame 3 between the mountings of the drive linkage member and the cable shifting arm 43 to the frame 3 form the four bars of the four-bar mechanism.

The cable shifting member 4 is configured to - in the vertical orientation 3h of the frame 3 - engage the hoisting cables 101 at a height H above the pivot axis P by means of the cable engagement surface 41, as illustrated in figures 2 and 3.

In figure 3, the cable shifting arms 43 have been moved by means of the shifting actuators 42 relative to their positions in figure 2 such as to bring the cable engagement surface 41 into engagement with the hoisting cables 101 at the height H relative to their lower ends that are pivotally secured to the frame 3.

In figures 3 and 4, the shifting actuators 42 and linkage members 47 and 48 have been removed for the sake of clarity in showing the positions of the cable shifting arms 43.

By means of the continued operation of the shifting actuators 42, the cable shifting member 4 is configured to consequently apply at said height H above the pivot axis P a cable shifting force S on the hoisting cables 101, in this case a horizontal pushing force S. This pushing force S is such as to move the frame 3 relative to the part of the hoisting cables 101 that extends above the height H above the pivot axis P. Effectively the pivot axis P displaces over a horizontal distance D to a position that is backwards from the line of action L as the frame 3 pivots upwardly.

In figure 4, the frame 3 has been pivoted upwardly as a result of the cable shifting force S into an intermediate orientation, and in figures 5 and 6 it has reached the horizontal orientation 3h.

It is also visible in figure 5 that as a result of the pushing force S and a counterforce on the tool 1 exerted by the cables 101 at the pivot axis P, the hoisting cables 110 run slanted over the horizontal distance D in the horizontal orientation 3h of the functional part 3.

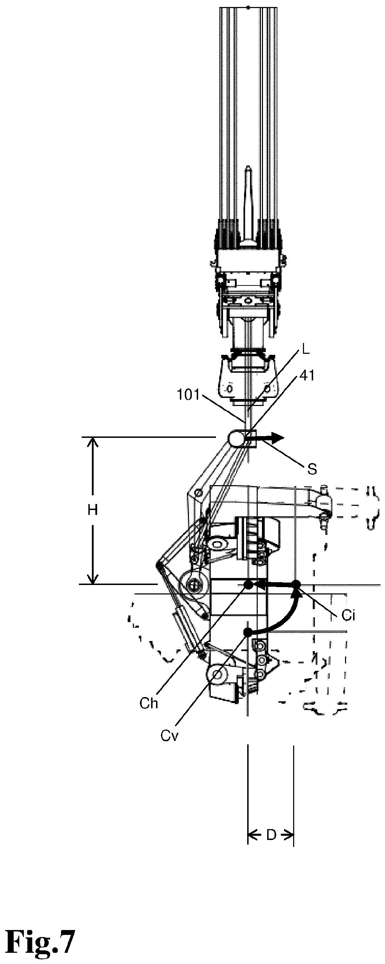

In the shown embodiment of the upending and lifting tool 1, the cable shifting mechanism is configured to, in one continuous movement, displace the member 4 by means of the actuators 42 such as to move the frame 3 from the vertical orientation 3v of figure 1 to the horizontal orientation 3h of figure 4 thereof. This displacement is composed of firstly a pivoting movement of the frame relative to the hoisting cables 101 from the vertical orientation 3v of figure 2 to an upwardly pivoted orientation, and secondly a shifting movement of the center of gravity C relative to the cable engagement surface. The first and second components take place simultaneously, as the center of gravity C will naturally remain aligned with the line of action L during the entire movement. The components are however illustrated separately in figure 7 merely for understanding. For the first, pivoting component, the corresponding displacement of the center of gravity C towards an imaginary location Ci is indicated by the bold arched arrow. For the second, cable shifting component, the corresponding displacement of the center of gravity is indicated by the bold backwards arrow.

In the shown embodiment of the tool 1, the shifting actuators 42 driving the pivoting of the driven linkage members 47 with respect to the frame 3 are in the form of hydraulic cylinders 42, which are at an inner end thereof mounted to the frame 3 and at an outer end thereof to the pivot joint between the driven linkage member 47 and the intermediate linkage member 48. Obviously it could also have been mounted to the driven linkage member 47 at another location thereof, for instance between the inner and outer end thereof, preferably close to the outer end thereof. The tube 45 is located substantially beyond the linking points 49 such that the cable shifting arms 43 function as levers amplifying the driven movement. Upon extension of the cylinder 42, the driven linkage member 47 is pivoted towards the line of action L, pivoting via the intermediate linkage member 48 and the linking points 49 the cable shifting arms 43 towards the line of action L, and therewith the cable engagement surface 41 towards engagement with the hoisting cables 101 as shown in figure 3.

Once engaged, the further extension of the cylinder 42, shown in figure 4, makes the engaging surface 41 push against the cables 101 with the horizontal force S, by which the frame of the tool 1 is pushed off against the cables 101.

As visible in figures 2, 3 and 4 but best in figure 1, the inner end 46 of the pivotal cable shifting member 4, here with cable shifting arms 43, is pivotally mounted to the frame 3 at a location above the pivot axis P when the frame is in the horizontal orientation 3h.

The inner ends of the driven linkage members 47 are pivotally mounted to the frame 3 at a location below the pivot axis P when the frame is in the horizontal orientation 3h, and the one end of each cylinder 42 is pivotally mounted to the frame 3 at a location below the mounting location of the inner ends of the driven linkage members 47.

The upending and lifting tool 1 comprises a lock mechanism 44 which is operative between the cable shifting member 4 on one hand and the frame 3 on the other hand. The mechanism 44 is configured to in the horizontal position 3h of the frame 3 secure the position of the cable engagement surface 41 relative to the center of gravity C, such as to retain horizontal orientation 3h of the frame 3. The lock mechanism 44 is formed by the cylinders 42, which are configured to remain extended after reaching the horizontal orientation 3h of the frame 3.

From figure 5 it can be verified that, as the tool is approaching a horizontally arranged monopile 201, e.g. having a diameter of between 5 and 12 meters, the cable engagement surface 41 extends over 5 - 10 meters horizontally. The cable shifting arms 43 extend from respective lateral ends of the cable engagement surface 41 to the inner end 46 of the cable shifting member 4.

In the shown embodiment of the tool 1, the functional part is operable for coupling the tool 1 to the monopile 201, and the functional part of the tool 1 comprises one or more guiding members 52 configured to guide the tool 1 into engagement with the monopile 201 when the frame 3 is in the horizontal orientation 3h.

The functional part of the tool 1 is configured for gripping the longitudinal end of the monopile 201, with multiple operable friction grip members 51 of the tool 1 which are configured to engage the inside of the longitudinal end of the monopile 201, and to maintain the engagement such as to maintain the coupling between the tool 1 and the longitudinal end during upending of the monopile 201.

Each guiding member 52 is configured to, when the tool 1 is relatively proximate to the monopile, e.g. as shown in figure 5, engage the monopile 201. The engagement by the one or more guiding members 51 is such as to restrict movement of the tool 1 in at least radial directions relative to the monopile 201, and configured to during a movement of the tool 1 towards a position wherein it can grip the monopile by means of the gripping members 51, maintain the engagement thereof such as to guide the tool 1 towards the gripping position.

In an embodiment two guiding members 52 are provided in the form of guiding arms, of which outer ends are to engage the monopile 201.

In an embodiment, the guiding members, e.g. at the outer ends of guiding arms, comprise wheels, the circumferential surfaces of which engage the outer surface of the monopile 201. In an embodiment, the one or more wheels are motorized to assist the motion of the tool to the gripping position.

The arms 52 are pivotally mounted to the frame 3 of the tool 1 such that the outer ends are movable in the radial direction of the monopile 201.

## Claims

1. Upending and lifting tool (1) for upending and lifting an object (201), e.g. a foundation member of an offshore wind turbine, e.g. a monopile, the tool being configured to be suspended from one or more hoisting cables (101), e.g. a pair of hoisting cables suspended from a crane hook of a crane, the tool comprising a frame (3) provided with a functional part that is operable for coupling an object (201) to the tool, and the frame being provided with a cable attachment member (2) by means of which the frame (3) of the tool (1) is pivotally connectable to the one or more hoisting cables (101) in order to be pivotable about a substantially horizontal pivot axis (P) relative to the one or more hoisting cables between:
- a vertical orientation (3v), in which the center of gravity (C) of the frame and the pivot axis (P) are aligned on a vertical line (L), and
- a horizontal orientation (3h), wherein the tool is engageable with the object in a horizontal orientation of the object prior to upending thereof to a vertical orientation thereof by means of the tool,
wherein in the horizontal orientation (3h) of the frame (3) the center of gravity (C) is offset over a horizontal distance (D) from the pivot axis (P),
**characterized in that**
the tool (1) further comprises a cable shifting mechanism, said mechanism comprising:
- a cable shifting member (4) which is mounted to the frame (3) and is moveable relative to the frame (3), which cable shifting member has a cable engagement surface (41),
- one or more shifting actuators (42) operative between the cable shifting member (4) and the frame (3),
wherein the cable shifting mechanism is configured to, with the tool (1) suspended from one or more hoisting cables (101) and with the frame (3) initially in the vertical orientation (3v), perform a routine which comprises:
- operating the one or more shifting actuators (42), thereby moving the cable shifting member and engaging the cable engagement surface (41) with the one or more hoisting cables (101) at a height (H) above the pivot axis (P), further continuing said motion of the cable shifting member and thereby applying a cable shifting force (S) on the one or more hoisting cables (101) resulting, in reaction, in a pivoting of the frame (3) into the horizontal orientation (3h) thereof.

2. Upending and lifting tool (1) according to claim 1, wherein the cable shifting member (4) comprises one or more cable shifting arms (43), e.g. two laterally spaced apart cable shifting arms, each cable shifting arm (43) comprising an inner end (46) pivotally connected to the frame (3) and the cable engagement surface (41) being remote from said inner end (46), e.g. arranged at a free end (45) of the one or more cable shifting arms (43).

3. Upending and lifting tool (1) according to claim 1 or 2, wherein the attachment member (2) comprises a pivot joint secured to the frame (3) and connectable to the one or more hoisting cables (101).

4. Upending and lifting tool (1) according to claim 2 or 3, wherein the one or more pivotal cable shifting arms (43) form part of a four-bar mechanism (3, 43, 47, 48) together with:
- one or more driven linkage members (47), each pivotally mounted at an inner end thereof to the frame (3), and
- one or more intermediate linkage members (48), each pivotally connected at an inner end thereof to an outer end of a respective one of the driven linkage members, and at an outer end thereof pivotally connected to a respective one of the cable shifting arms (43), at a location between the inner end (46) and an outer end thereof, e.g. the free end (45) thereof, if present" and
- a section of the frame between the inner end of the driven linkage member and the inner end of the one or more cable shifting arms,
wherein the one or more shifting actuators (42) are arranged to drive a pivoting of the one or more driven linkage members (47) in the direction towards the hoisting cables (101), and, via the one or more intermediate linkage members (48), thereby driving a pivoting of the one or more arms (43) in the direction of and against the one or more hoisting cables, and thereby the engagement with and subsequent application of the cable shifting force (S) to the one or more hoisting cables (101).

5. Upending and lifting tool (1) according to any one or more of claims 1 - 4, wherein the inner end (46) of the cable shifting member (4) is pivotally mounted to the frame (3) at a location which is above the pivot axis (P) when the frame is in the horizontal orientation (3h).

6. Upending and lifting tool (1) according to claim 2 and optionally also any one or more of the claims 3 - 5, wherein the one or more shifting actuators (42) are one or more hydraulic cylinders (42) of which one end is connected to the frame (3), and wherein an extension of the one or more hydraulic cylinders drives the pivoting of the one or more cable shifting arms (43) towards and against the one or more hoisting cables (101),
e.g. wherein, when the upending and lifting tool also is embodied according to claim 4, the other ends of the one or more hydraulic cylinders are mounted to the one or more driven linkage members (47) and via these driven linkage members (47) and the one or more intermediate linkage members (48) connected to the one or more cable shifting arms.

7. Upending and lifting tool (1) according to any one or more of the preceding claims, comprising a lock mechanism (44) operative between the cable shifting member (4) on one hand and the frame (3) on the other hand, configured to - in the horizontal orientation of the frame - secure the position of the cable shifting member (4) relative to the center of gravity (C), such as to retain the frame in the horizontal orientation (3h).

8. Upending and lifting tool (1) according to claim 7, wherein the lock mechanism (44) comprises the one or more shifting actuators (42), the shifting actuators being configured to - in the horizontal orientation of the frame - secure the position of the cable shifting member (4) relative to the center of gravity (C), such as to retain the frame in the horizontal orientation, e.g. wherein, when the upending and lifting tool also is embodied according to claim 6, the one or more shifting actuators are configured to secure the position by maintaining the extension thereof in the horizontal orientation of the frame.

9. Upending and lifting tool (1) according to any one or more of the preceding claims, wherein the cable engagement surface (41) extends over between 5 and 10 meters in horizontal direction, e.g. as a horizontal cable engagement tube, e.g. wherein the tool accords to claim 4 and the cable shifting member (4) comprises two cable shifting arms (43) supporting a horizontal cable engagement tube.

10. Upending and lifting tool (1) according to any one or more of the preceding claims, wherein the functional part (3) is operable for gripping in the horizontal orientation (3h) of the frame a longitudinal end of a wind turbine component, e.g. of a monopile (201) or a mast, and retaining the longitudinal end during upending of the wind turbine component from a horizontal orientation to a vertical orientation thereof while the frame pivots towards the vertical orientation (3v).

11. An installation vessel for installation of a foundation member of an offshore wind turbine, e.g. a monopile, which vessel is provided with a crane and a tool according to any one or more of the preceding claims, e.g. the vessel having a deck configured to store thereon one or more monopiles in horizontal orientation.

12. A method for upending and lifting an object, e.g. a foundation member of an offshore wind turbine, e.g. a monopile, wherein use is made of an upending and lifting tool according to any one or more of the preceding claims 1 - 10, wherein, with the tool (1) suspended from one or more hoisting cables (101), e.g. from a crane hook of a crane, and with the frame (3) initially in the vertical orientation (3v), a routine is performed which comprises:
- operating the one or more shifting actuators (42), thereby moving the cable shifting member and engaging the cable engagement surface (41) with the one or more hoisting cables (101) at a height (H) above the pivot axis (P) and further continuing said motion of the cable shifting member and thereby applying a cable shifting force (S) on the one or more hoisting cables (101) resulting, in reaction, in a pivoting of the frame (3) into the horizontal orientation thereof.

13. Method according to claim 12, wherein said routine is performed after pick-up of the tool by means of a crane, e.g. from a deck of a vessel, with the frame (3) initially in the vertical orientation (3v) so as to bring to tool with the frame thereof in horizontal orientation, followed by engaging the tool with the object in horizontal orientation, e.g. a monopile horizontally aboard of vessel.

## Patentansprüche

1. Aufricht- und Hebewerkzeug (1) zum Aufrichten und Heben eines Objekts (201), z. B. eines Gründungselements einer Offshore-Windturbine, z. B. eines Einzelpfahls, wobei das Werkzeug ausgestaltet ist, um an einem oder mehreren Hebeseilen (101) aufgehängt zu werden, z. B. einem Paar von Hebeseilen, die an einem Kranhaken eines Krans hängen, wobei das Werkzeug einen Rahmen (3) umfasst, der mit einem Funktionsteil versehen ist, das zum Koppeln eines Objekts (201) mit dem Werkzeug betreibbar ist, und wobei der Rahmen mit einem Seilbefestigungselement (2) versehen ist, mit dem der Rahmen (3) des Werkzeugs (1) drehbar mit dem einen oder den mehreren Hebeseilen (101) verbindbar ist, um um eine im Wesentlichen horizontale Drehachse (P) relativ zu dem einen oder den mehreren Hebeseilen drehbar zu sein zwischen:
- einer vertikalen Ausrichtung (3v), bei der der Schwerpunkt (C) des Rahmens und die Drehachse (P) auf einer vertikalen Linie (L) ausgerichtet sind, und
- einer horizontalen Ausrichtung (3h), in der das Werkzeug mit dem Objekt in einer horizontalen Ausrichtung des Objekts in Eingriff bringbar ist, bevor es mittels des Werkzeugs in eine vertikale Ausrichtung aufgerichtet wird,
wobei in der horizontalen Ausrichtung (3h) des Rahmens (3) der Schwerpunkt (C) um einen horizontalen Abstand (D) von der Drehachse (P) versetzt ist,
**dadurch gekennzeichnet, dass**
das Werkzeug (1) ferner einen Seilverschiebungsmechanismus umfasst, wobei der Mechanismus umfasst:
- ein Seilverschiebungselement (4), das an dem Rahmen (3) angebracht ist und relativ zu dem Rahmen (3) bewegbar ist, wobei das Seilverschiebungselement eine Seileingriffsfläche (41) aufweist,
- ein oder mehrere Schiebeaktoren (42), die zwischen dem Seilverschiebungselement (4) und dem Rahmen (3) wirken,
wobei der Seilverschiebungsmechanismus ausgestaltet ist, um, mit dem von einem oder mehreren Hebeseilen (101) herabhängenden Werkzeug (1) und mit dem Rahmen (3) anfänglich in der vertikalen Ausrichtung (3v), eine Routine durchzuführen, die umfasst:
- Betätigen des einen oder der mehreren Schiebeaktoren (42), wodurch das Seilverschiebungselement bewegt wird und die Seileingriffsfläche (41) mit dem einen oder den mehreren Hebeseilen (101) in einer Höhe (H) über der Drehachse (P) in Eingriff gebracht wird, ferner Fortsetzen der Bewegung des Seilverschiebungselements und dadurch Aufbringen einer Seilverschiebungskraft (S) auf das eine oder die mehreren Hebeseile (101), was als Reaktion zu einem Drehen des Rahmens (3) in die horizontale Ausrichtung (3h) davon führt.

2. Aufricht- und Hebewerkzeug (1) nach Anspruch 1, wobei das Seilverschiebungselement (4) einen oder mehrere Seilverschiebungsarme (43), z. B. zwei seitlich beabstandete Seilverschiebungsarme, umfasst, wobei jeder Seilverschiebungsarm (43) ein inneres Ende (46) umfasst, das drehbar mit dem Rahmen (3) verbunden ist, und die Seileingriffsfläche (41) von dem inneren Ende (46) entfernt ist, z. B. an einem freien Ende (45) des einen oder der mehreren Seilverschiebungsarme (43) angeordnet ist.

3. Aufricht- und Hebewerkzeug (1) nach Anspruch 1 oder 2, wobei das Befestigungselement (2) ein Drehgelenk umfasst, das an dem Rahmen (3) befestigt und mit dem einen oder den mehreren Hebeseilen (101) verbindbar ist.

4. Aufricht- und Hebewerkzeug (1) nach Anspruch 2 oder 3, wobei der eine oder die mehreren drehbaren Seilverschiebungsarme (43) Teil eines Vierstabmechanismus (3, 43, 47, 48) bilden, zusammen mit:
- einem oder mehreren angetriebenen Verbindungselementen (47), die jeweils an einem inneren Ende davon drehbar an dem Rahmen (3) angebracht sind, und
- einem oder mehreren Zwischenverbindungselementen (48), die jeweils an einem inneren Ende davon drehbar mit einem äußeren Ende eines jeweiligen der angetriebenen Verbindungselemente verbunden sind und an einem äußeren Ende davon drehbar mit einem jeweiligen der Seilverschiebungsarme (43) an einer Stelle zwischen dem inneren Ende (46) und einem äußeren Ende davon, z. B. dem freien Ende (45) davon, falls vorhanden, verbunden sind, und
- einem Abschnitt des Rahmens zwischen dem inneren Ende des angetriebenen Verbindungselements und dem inneren Ende des einen oder der mehreren Seilverschiebungsarme,
wobei der eine oder die mehreren Schiebeaktoren (42) angeordnet sind, um ein Drehen des einen oder der mehreren angetriebenen Verbindungselemente (47) in der Richtung hin zu den Hebeseilen (101) anzutreiben und dadurch über das eine oder die mehreren Zwischenverbindungselemente (48) ein Drehen des einen oder der mehreren Arme (43) in der Richtung des und gegen das eine oder die mehreren Hebeseile und dadurch den Eingriff mit und das anschließende Aufbringen der Seilverschiebungskraft (S) auf das eine oder die mehreren Hebeseile (101) anzutreiben.

5. Aufricht- und Hebewerkzeug (1) nach einem oder mehreren der Ansprüche 1 - 4, wobei das innere Ende (46) des Seilverschiebungselements (4) drehbar an dem Rahmen (3) an einer Stelle angebracht ist, die sich oberhalb der Drehachse (P) befindet, wenn der Rahmen in der horizontalen Ausrichtung (3h) ist.

6. Aufricht- und Hebewerkzeug (1) nach Anspruch 2 und wahlweise auch nach einem oder mehreren der Ansprüche 3 - 5, wobei der eine oder die mehreren Schiebeaktoren (42) ein oder mehrere Hydraulikzylinder (42) sind, von denen ein Ende mit dem Rahmen (3) verbunden ist, und wobei ein Ausdehnen des einen oder der mehreren Hydraulikzylinder das Drehen des einen oder der mehreren Seilverschiebungsarme (43) in Richtung und gegen das eine oder die mehreren Hebeseile (101) antreibt,
wobei z. B., wenn das Aufricht- und Hebewerkzeug auch gemäß Anspruch 4 ausgeführt ist, die anderen Enden des einen oder der mehreren Hydraulikzylinder an dem einen oder den mehreren angetriebenen Verbindungselementen (47) angebracht sind und über diese angetriebenen Verbindungselemente (47) und das eine oder die mehreren Zwischenverbindungselemente (48) mit dem einen oder den mehreren Seilverschiebungselementen verbunden sind.

7. Aufricht- und Hebewerkzeug (1) nach einem oder mehreren der vorhergehenden Ansprüche, umfassend einen Verriegelungsmechanismus (44), der zwischen dem Seilverschiebungselement (4) einerseits und dem Rahmen (3) andererseits wirksam ist und ausgestaltet ist, um - in der horizontalen Ausrichtung des Rahmens - die Position des Seilverschiebungselements (4) relativ zu dem Schwerpunkt (C) zu sichern, um den Rahmen in der horizontalen Ausrichtung (3h) zu halten.

8. Aufricht- und Hebewerkzeug (1) nach Anspruch 7, wobei der Verriegelungsmechanismus (44) den einen oder die mehreren Schiebeaktoren (42) umfasst, wobei die Schiebeaktoren ausgestaltet sind, um - in der horizontalen Ausrichtung des Rahmens - die Position des Seilverschiebungselements (4) relativ zu dem Schwerpunkt (C) zu sichern, um den Rahmen in der horizontalen Ausrichtung zu halten, wobei z. B., wenn das Aufricht- und Hebewerkzeug auch gemäß Anspruch 6 ausgeführt ist, der eine oder die mehreren Schiebeaktoren ausgestaltet sind, um die Position zu sichern, indem die Ausdehnung davon in der horizontalen Ausrichtung des Rahmens beibehalten wird.

9. Aufricht- und Hebewerkzeug (1) nach einem oder mehreren der vorhergehenden Ansprüche, wobei sich die Seileingriffsfläche (41) über 5 bis 10 Meter in horizontaler Richtung erstreckt, z. B. als horizontales Seileingriffsrohr, wobei z. B. das Werkzeug nach Anspruch 4 ausgeführt ist und das Seilverschiebungselement (4) zwei Seilverschiebungsarme (43) umfasst, die ein horizontales Seileingriffsrohr halten.

10. Aufricht- und Hebewerkzeug (1) nach einem oder mehreren der vorhergehenden Ansprüche, wobei das Funktionsteil (3) zum Greifen eines Längsendes einer Windturbinenkomponente, z. B. eines Einzelpfahls (201) oder eines Mastes, in der horizontalen Ausrichtung (3h) des Rahmens und zum Halten des Längsendes während eines Aufrichtens der Windturbinenkomponente von einer horizontalen Ausrichtung in eine vertikale Ausrichtung davon betreibbar ist, während sich der Rahmen in Richtung der vertikalen Ausrichtung (3v) dreht.

11. Installationsschiff zur Installation eines Gründungselements einer Offshore-Windturbine, z. B. eines Einzelpfahls, wobei das Schiff mit einem Kran und einem Werkzeug nach einem oder mehreren der vorhergehenden Ansprüche versehen ist, wobei z. B. das Schiff ein Deck aufweist, das ausgestaltet ist, um darauf einen oder mehrere Einzelpfähle in horizontaler Ausrichtung zu lagern.

12. Verfahren zum Aufrichten und Heben eines Objekts, z. B. eines Gründungselements einer Offshore-Windturbine, z. B. eines Einzelpfahls, wobei ein Aufricht- und Hebewerkzeug nach einem oder mehreren der vorhergehenden Ansprüche 1 - 10 verwendet wird, wobei, mit dem Werkzeug (1), das von einem oder mehreren Hebeseilen (101) herabhängt, z. B. von einem Kranhaken eines Krans, und mit dem Rahmen (3) anfänglich in der vertikalen Ausrichtung (3v), eine Routine durchgeführt wird, die umfasst:
- Betätigen des einen oder der mehreren Schiebeaktoren (42), wodurch das Seilverschiebungselement bewegt und die Seileingriffsfläche (41) mit dem einen oder den mehreren Hebeseilen (101) in einer Höhe (H) über der Drehachse (P) in Eingriff gebracht wird, und ferner Fortsetzen der Bewegung des Seilverschiebungselements und dadurch Aufbringen einer Seilverschiebungskraft (S) auf das eine oder die mehreren Hebeseile (101), was als Reaktion zu einem Drehen des Rahmens (3) in die horizontale Ausrichtung davon führt.

13. Verfahren nach Anspruch 12, wobei die Routine nach einem Aufnehmen des Werkzeugs mittels eines Krans, z. B. von einem Deck eines Schiffes, durchgeführt wird, mit dem Rahmen (3) anfänglich in der vertikalen Ausrichtung (3v), um das Werkzeug mit dem Rahmen davon in eine horizontale Ausrichtung zu bringen, gefolgt von einem Ineingriffbringen des Werkzeugs mit dem Objekt in horizontaler Ausrichtung, z. B. einem Einzelpfahl horizontal an Bord eines Schiffes.

## Revendications

1. Outil de retournement et de levage (1) pour retourner et lever un objet (201), par exemple un élément de fondation d'une éolienne en mer, par exemple une monopile, l'outil étant configuré pour être suspendu à un ou plusieurs câbles de levage (101), par exemple une paire de câbles de levage suspendus à un crochet de grue d'une grue, l'outil comprenant un bâti (3) prévu avec une partie fonctionnelle qui peut fonctionner pour coupler un objet (201) à l'outil, et le bâti étant prévu avec un élément de fixation de câble (2) au moyen duquel le bâti (3) de l'outil (1) peut être raccordé, de manière pivotante, aux un ou plusieurs câbles de levage (101) afin de pouvoir pivoter autour d'un axe de pivot (P) sensiblement horizontal par rapport aux un ou plusieurs câbles de levage entre :
- une orientation verticale (3v), dans laquelle le centre de gravité (C) du bâti et l'axe de pivot (P) sont alignés sur une ligne verticale (L), et
- une orientation horizontale (3h), dans laquelle l'outil peut être mis en prise avec l'objet dans une orientation horizontale de l'objet avant son retournement dans son orientation verticale au moyen de l'outil,
dans lequel dans l'orientation horizontale (3h) du bâti (3), le centre de gravité (C) est décalé sur une distance horizontale (D) de l'axe de pivot (P),
**caractérisé en ce que**
l'outil (1) comprend en outre un mécanisme de déplacement de câble, ledit mécanisme comprenant:
- un élément de déplacement de câble (4) qui est monté sur le bâti (3) et est mobile par rapport au bâti (3), lequel élément de déplacement de câble a une surface de mise en prise de câble (41),
- un ou plusieurs actionneurs de déplacement (42) opérationnels entre l'élément de déplacement de câble (4) et le bâti (3),
dans lequel le mécanisme de déplacement de câble est configuré pour, avec l'outil (1) suspendu à un ou plusieurs câbles de levage (101) et avec le bâti (3) initialement dans l'orientation verticale (3v), réaliser une routine qui comprend les étapes consistant à:
- actionner les un ou plusieurs actionneurs de déplacement (42), déplacer ainsi l'élément de déplacement de câble et mettre en prise la surface de mise en prise de câble (41) avec les un ou plusieurs câbles de levage (101) à une hauteur (H) au-dessus de l'axe de pivot (P), continuer en outre ledit mouvement de l'élément de déplacement de câble et appliquer ainsi une force de déplacement de câble (S) sur les un ou plusieurs câbles de levage (101) se traduisant, en réaction, par un pivotement du bâti (3) dans son orientation horizontale (3h).

2. Outil de retournement et de levage (1) selon la revendication 1, dans lequel l'élément de déplacement de câble (4) comprend un ou plusieurs bras de déplacement de câble (43), par exemple deux bras de déplacement de câble latéralement espacés, chaque bras de déplacement de câble (43) comprenant une extrémité interne (46) raccordée de manière pivotante au bâti (3) et la surface de mise en prise de câble (41) étant à distance de ladite extrémité interne (46), par exemple agencée à une extrémité libre (45) des un ou plusieurs bras de déplacement de câble (43).

3. Outil de retournement et de levage (1) selon la revendication 1 ou 2, dans lequel l'élément de fixation (2) comprend une articulation à pivot fixée sur le bâti (3) et pouvant être raccordée aux un ou plusieurs câbles de levage (101).

4. Outil de retournement et de levage (1) selon la revendication 2 ou 3, dans lequel les un ou plusieurs bras de déplacement de câble pivotants (43) font partie d'un mécanisme à quatre barres (3, 43, 47, 48) conjointement avec:
- un ou plusieurs éléments de liaison entraînés (47), chacun monté, de manière pivotante, au niveau de leur extrémité interne, sur le bâti (3), et
- un ou plusieurs éléments de liaison intermédiaires (48), chacun raccordé, de manière pivotante, au niveau de leur extrémité interne, à une extrémité externe d'un élément respectif des éléments de liaison entraînés, et au niveau de leur extrémité externe, raccordé de manière pivotante, à un bras respectif des bras de déplacement de câble (43), à un emplacement entre leur extrémité interne (46) et leur extrémité externe, par exemple, leur extrémité libre (45), si elle est présente, et
- une section du bâti entre l'extrémité interne de l'élément de liaison entraîné et l'extrémité interne des un ou plusieurs bras de déplacement de câble,
dans lequel les un ou plusieurs actionneurs de déplacement (42) sont agencés pour entraîner un pivotement des un ou plusieurs éléments de liaison entraînés (47) dans la direction vers les câbles de levage (101), et via les un ou plusieurs éléments de liaison intermédiaires (48), entraînant ainsi un pivotement des un ou plusieurs bras (43) dans la direction de et contre les un ou plusieurs câbles de levage, et ainsi la mise en prise avec et l'application successive de la force de déplacement de câble (S) sur les un ou plusieurs câbles de levage (101).

5. Outil de retournement et de levage (1) selon l'une quelconque ou plusieurs des revendications 1 à 4, dans lequel l'extrémité interne (46) de l'élément de déplacement de câble (4) est montée, de manière pivotante, sur le bâti (3) à un emplacement qui est au-dessus de l'axe de pivot (P) lorsque le bâti est dans l'orientation horizontale (3h).

6. Outil de retournement et de levage (1) selon la revendication 2 et facultativement également selon l'une quelconque ou plusieurs des revendications 3 à 5, dans lequel les un ou plusieurs actionneurs de déplacement (42) sont un ou plusieurs vérins hydrauliques (42) dont une extrémité est raccordée au bâti (3) et dans lequel une extension des un ou plusieurs vérins hydrauliques entraîne le pivotement des un ou plusieurs bras de déplacement de câble (43) vers et contre les un ou plusieurs câbles de levage (101),
par exemple, dans lequel, lorsque l'outil de retournement et de levage est également mis en oeuvre selon la revendication 4, les autres extrémités des un ou plusieurs vérins hydrauliques sont montées sur les un ou plusieurs éléments de liaison entraînés (47) et via ces éléments de liaison entraînés (47) et les un ou plusieurs éléments de liaison intermédiaires (48), raccordées aux un ou plusieurs bras de déplacement de câble.

7. Outil de retournement et de levage (1) selon l'une quelconque ou plusieurs des revendications précédentes, comprenant un mécanisme de verrouillage (44) opérationnel entre l'élément de déplacement de câble (4) d'une part, et le bâti (3) d'autre part, configuré pour - dans l'orientation horizontale du bâti - fixer la position de l'élément de déplacement de câble (4) par rapport au centre de gravité (C), afin de retenir le bâti dans l'orientation horizontale (3h).

8. Outil de retournement et de levage (1) selon la revendication 7, dans lequel le mécanisme de verrouillage (44) comprend les un ou plusieurs actionneurs de déplacement (42), les actionneurs de déplacement étant configurés pour - dans l'orientation horizontale du bâti - fixer la position de l'élément de déplacement de câble (4) par rapport au centre de gravité (C), afin de retenir le bâti dans l'orientation horizontale, par exemple dans lequel, lorsque l'outil de retournement et de levage est également mis en oeuvre selon la revendication 6, les un ou plusieurs actionneurs de déplacement sont configurés pour fixer la position en maintenant leur extension dans l'orientation horizontale du bâti.

9. Outil de retournement et de levage (1) selon l'une quelconque ou plusieurs des revendications précédentes, dans lequel la surface de mise en prise de câble (41) s'étend entre 5 et 10 mètres dans la direction horizontale, par exemple en tant que tube de mise en prise de câble horizontal, par exemple dans lequel l'outil est selon la revendication 4 et l'élément de déplacement de câble (4) comprend deux bras de déplacement de câble (43) supportant un tube de mise en prise de câble horizontal.

10. Outil de retournement et de levage (1) selon l'une quelconque ou plusieurs des revendications précédentes, dans lequel la partie fonctionnelle (3) est opérationnelle pour saisir, dans l'orientation horizontale (3h) du bâti, une extrémité longitudinale d'un composant d'éolienne, par exemple d'une monopile (201) ou d'un mât, et retenir l'extrémité longitudinale pendant le retournement du composant d'éolienne d'une orientation horizontale à son orientation verticale alors que le bâti pivote vers l'orientation verticale (3v).

11. Navire d'installation pour l'installation d'un élément de fondation d'une éolienne en mer, par exemple une monopile, lequel navire est prévu avec une grue et un outil selon l'une quelconque ou plusieurs des revendications précédentes, par exemple le navire ayant un pont configuré pour stocker, sur ce dernier, une ou plusieurs monopiles, dans l'orientation horizontale.

12. Procédé pour retourner et lever un objet, par exemple un élément de fondation d'une éolienne en mer, par exemple une monopile, dans lequel on utilise un outil de retournement et de levage selon l'une quelconque ou plusieurs des revendications 1 à 10, dans lequel, avec l'outil (1) suspendu aux un ou plusieurs câbles de levage (101), par exemple à un crochet de grue d'une grue, ou avec le bâti (3) initialement dans l'orientation verticale (3v), on réalise une routine qui comprend les étapes consistant à :
- actionner les un ou plusieurs actionneurs de déplacement (42), déplacer ainsi l'élément de déplacement de câble et mettre en prise la surface de mise en prise de câble (41) avec les un ou plusieurs câbles de levage (101) à une hauteur (H) au-dessus de l'axe de pivot (P) et continuer en outre ledit mouvement de l'élément de déplacement de câble et appliquer ainsi une force de déplacement de câble (S) sur les un ou plusieurs câbles de levage (101) se traduisant, en réaction, par un pivotement du bâti (3) dans son orientation horizontale.

13. Procédé selon la revendication 12, dans lequel ladite routine est réalisée après le ramassage de l'outil au moyen d'une grue, par exemple à partir d'un pont d'un navire, avec le bâti (3) initialement dans l'orientation verticale (3v) afin d'amener l'outil avec son bâti dans l'orientation horizontale, suivi par la mise en prise de l'outil avec l'objet dans l'orientation horizontale, par exemple une monopile horizontalement à bord du navire.
